# EUROPEAN PATENT APPLICATION

(11) **EP 1 359 435 A1**
(43) Date of publication of application: **05.11.2003**
(21) Application number: 03008803.3
(22) Date of filing: 23.04.2003
(51) Int. Cl.: G01S 13/56, G01S 13/34, G08B 13/181

(54) **Intruder monitoring system using a millimeter wave radar**

(30) Priority: 24.04.2002 JP 2002122669
(71) Applicant: Hitachi, Ltd., Chiyoda-ku, Tokyo 101-8010 (JP); Hitachi Car Engineering Co., Ltd., Hitachinaka-shi, Ibaraki 312-0062 (JP)
(72) Inventor: Nakazawa, Terumi, Hitachi, Ltd., Intell. Pr. Gr., Chiyoda-ku, Tokyo 100-8220 (JP); Mizuishi, Kenichi, Hitachi, Ltd., Intell. Pr. Gr., Chiyoda-ku, Tokyo 100-8220 (JP); Obara, Sanshirou, Sawa Service Co., Ltd., Hitachinaka-shi, ibaraki 312-0062 (JP); Onuma, Chieko, Hitachi, Ltd., Intell. Pr. Gr., Chiyoda-ku, Tokyo 100-8220 (JP); Kobayashi, Yoshiki, Hitachi, Ltd., Intell. Pr. Gr., Chiyoda-ku, Tokyo 100-8220 (JP); Bai, Jie, Hitachinaka-shi, Ibaraki 312-0062 (JP)
(74) Representative: Beetz & Partner Patentanwälte

(57) **Abstract**

The invention provides a millimeter wave radar monitoring system, which can reduce the installation cost and can improve reliability with less probability of false alarms. A millimeter wave radar unit (10) includes a millimeter wave radar (11) having a transmitting antenna (201) for radiating a radio wave and a receiving antenna (202) for receiving a wave reflected by a target having received the radio wave radiated from the transmitting antenna, and includes a signal processing unit (12) for the received radio wave. A target tracking and monitoring circuit section (20, 21) in a monitoring unit (20) collates position information of the target detected by the millimeter wave radar unit with monitoring area layout information held in a monitoring area layout signal section, thereby tracking a motion of the target. The target is displayed on a display along with the monitoring area layout information. When it is determined that the target is a suspicious invader, a warning device issues an alarm.

## Description

### BACKGROUND OF THE INVENTION

### 1. Field of the Invention

The present invention relates to a millimeter (extremely high frequency) wave radar monitoring system, and more particularly to a millimeter wave radar monitoring system suitable for detecting a target, e.g., an invader, while observing an object to be monitored, which is located within an indoor or outdoor layout, and for watching access to the monitored object by the target with a millimeter wave radar.

### 2. Description of the Related Art

Hitherto, a sensor for detecting an invader has been practiced as a security system using infrared rays. In such a system, an infrared transmitting unit and an infrared receiving unit are installed in an invasion monitoring area, and access to the area by an invader is detected by sensing interception of the infrared ray to be received.

### SUMMARY OF THE INVENTION

However, an infrared sensor has a problem that, because it takes a relatively long time for alignment of two optical axes of the transmitting unit and the receiving unit, the installation cost is increased. Another problem is in that, because the infrared sensor system issues an alarm signal upon interception of the infrared ray, a false alarm may be issued upon interception of the infrared ray by birds or small animals, and upon direct impingement of sunlight.

Accordingly, it is an object of the present invention to provide a millimeter wave radar monitoring system, which can reduce the installation cost with no need of a receiving unit, and can improve reliability with less probability of false alarms.
(1) To achieve the above object, the present invention provides a millimeter wave radar monitoring system comprising a millimeter wave radar unit, which includes a millimeter wave radar having a transmitting antenna for radiating a radio wave and a receiving antenna for receiving a wave reflected by a target having received the radio wave radiated from the transmitting antenna, and which includes a signal processing unit for the received radio wave, and a monitoring unit for monitoring the target based on information from the millimeter wave radar unit, wherein the monitoring unit includes a target tracking and monitoring unit for collating position information of the target detected by the millimeter wave radar unit with monitoring area layout information, thereby tracking a motion of the target, the target being displayed along with the monitoring area layout information.
   With the features mentioned above, the installation cost can be reduced, and reliability can be improved with less probability of false alarms.
(2) Also, to achieve the above object, the present invention provides a millimeter wave radar monitoring system comprising a millimeter wave radar unit, which includes a millimeter wave radar having a transmitting antenna for radiating a radio wave and a receiving antenna for receiving a wave reflected by a target having received the radio wave radiated from the transmitting antenna, and which includes a signal processing unit for the received radio wave, and a monitoring unit for monitoring the target based on information from the millimeter wave radar unit, wherein the monitoring unit includes a target tracking and monitoring unit for collating position information of the target detected by the millimeter wave radar unit with monitoring area layout information, thereby tracking a motion of the target, the target tracking and monitoring unit determining whether the target is a suspicious invader based on the position information of the target detected by the millimeter wave radar unit and position information of a monitored object contained in the monitoring area layout information, and issuing an alarm when the target is determined as being a suspicious invader.
   With the features mentioned above, the installation cost can be reduced, and reliability can be improved with less probability of false alarms.
(3) In above (1) or (2), preferably, the millimeter wave radar unit is embedded in a masking area of a wall or ceiling of a monitoring area.
(4) In above (3), preferably, the millimeter wave radar unit is movable along a wall surface or a ceiling surface.
(5) In above (3), preferably, the millimeter wave radar unit changes a radiation angle of the millimeter wave radar with time.

### BRIEF DESCRIPTION OF THE DRAWINGS

Fig. 1 is a block diagram showing the overall configuration of a millimeter wave radar monitoring system according to a first embodiment of the present invention;
Fig. 2 is a block diagram showing the configuration of a millimeter wave radar used in the millimeter wave radar monitoring system according to the first embodiment of the present invention;
Figs. 3A to 3C are charts for explaining the operation of the millimeter wave radar used in the millimeter wave radar monitoring system according to the first embodiment of the present invention;
Figs. 4A and 4B are explanatory views of a monitoring area layouts held in a monitoring-area layout signal section in the millimeter wave radar monitoring system according to the first embodiment of the present invention;
Fig. 5 is an explanatory view for explaining a manner of detecting the position of a target P(X1, Y1) within the monitoring area layout by the millimeter wave radar monitoring system according to the first embodiment of the present invention;
Fig. 6 is an explanatory view for explaining a manner of detecting the position of a target P(X1, Y1) within the monitoring area layout by the millimeter wave radar monitoring system according to the first embodiment of the present invention;
Fig. 7 is an explanatory view of a display example on a display obtained by the millimeter wave radar monitoring system according to the first embodiment of the present invention;
Fig. 8 is an explanatory view for explaining a manner of adjusting the millimeter wave radar when it is installed for use with the millimeter wave radar monitoring system according to the first embodiment of the present invention, and a manner of confirming the installed position, which is carried out sometimes;
Fig. 9 is a block diagram showing the overall configuration of a millimeter wave radar monitoring system according to a second embodiment of the present invention;
Fig. 10 is a plan arrangement view showing the configuration of a millimeter wave radar monitoring system according to a third embodiment of the present invention;
Fig. 11 is a plan arrangement view showing the configuration of a millimeter wave radar monitoring system according to a fourth embodiment of the present invention;
Fig. 12 is a plan arrangement view showing the configuration of a millimeter wave radar monitoring system according to a fifth embodiment of the present invention;
Fig. 13 is a plan arrangement view showing the configuration of a millimeter wave radar monitoring system according to a sixth embodiment of the present invention;
Fig. 14 is a side arrangement view showing the configuration of a millimeter wave radar monitoring system according to a seventh embodiment of the present invention;
Fig. 15 is a side arrangement view showing the configuration of a millimeter wave radar monitoring system according to an eighth embodiment of the present invention; and
Fig. 16 is a side arrangement view showing the configuration of a millimeter wave radar monitoring system according to a ninth embodiment of the present invention.

### DESCRIPTION OF THE PREFERRED EMBODIMENTS

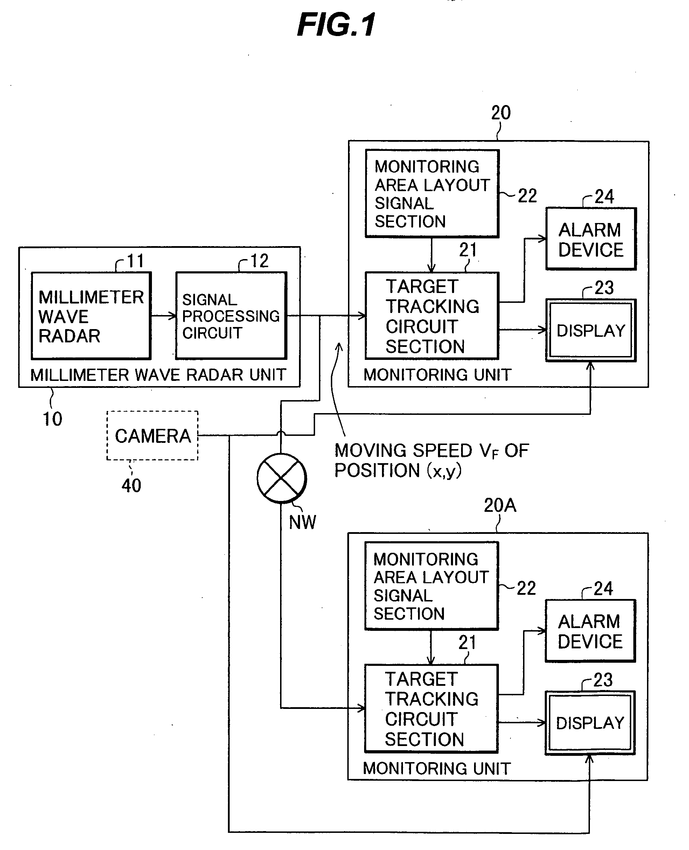

The overall configuration of a millimeter wave radar monitoring system according to a first embodiment of the present invention will be first described below with reference to Fig. 1.

Fig. 1 is a block diagram showing the overall configuration of the millimeter wave radar monitoring system according to the first embodiment of the present invention.

The monitoring system comprises a millimeter wave radar unit 10 and monitoring units 20, 20A. The millimeter wave radar unit 10 is disposed in an area including an indoor or outdoor object to be monitored. The outdoor object to be monitored is, e.g., a door or a window of a housing or a building. The indoor object to be monitored is, e.g., a safe (cashbox). The millimeter wave radar unit 10 comprises a millimeter wave radar 11 having antennas to transmit and receive radio waves, and a signal processing circuit 12 for processing a signal from the millimeter wave radar 11. The signal processing circuit 12 processes a signal transmitted from the millimeter wave radar 11 and a signal received by the millimeter wave radar 11, and outputs signals indicating a position F(X,Y) and a moving speed V_{F} of a moving object to each of the monitoring units 20, 20A.

The monitoring unit 20 is disposed, for example, in the indoor close to the object to be monitored. The monitoring unit 20A is disposed far away from the object to be monitored via a network NW such as a LAN. The monitoring unit 20A is installed, for example, in a monitoring center of a security company. The monitoring unit 20 comprises a target tracking circuit section 21, a monitoring-area layout signal section 22, an alarm device 24, and a display 23. Likewise, the monitoring unit 20A comprises a target tracking circuit section 21, a monitoring-area layout signal section 22, an alarm device 24, and a display 23. Note that the monitoring unit 20 is required to include the alarm device 24, but the display 23 may be dispensed with in some cases from the viewpoint of cost.

The target tracking circuit section 21 receives a signal from the signal processing circuit 12 and compares the received signal with a signal from the monitoring-area layout signal section 22 for determination. When it is determined that the target is a suspicious invader, the alarm device 24 issues an alarm, and/or the target is displayed on the display 23. The monitoring-area layout signal section 22 contains layout information corresponding to maps indicating respective positions of ornaments and housings (buildings) in the monitoring area.

Additionally, an image picked up by a camera 40 can also be displayed on the display 23 as described later in more detail.

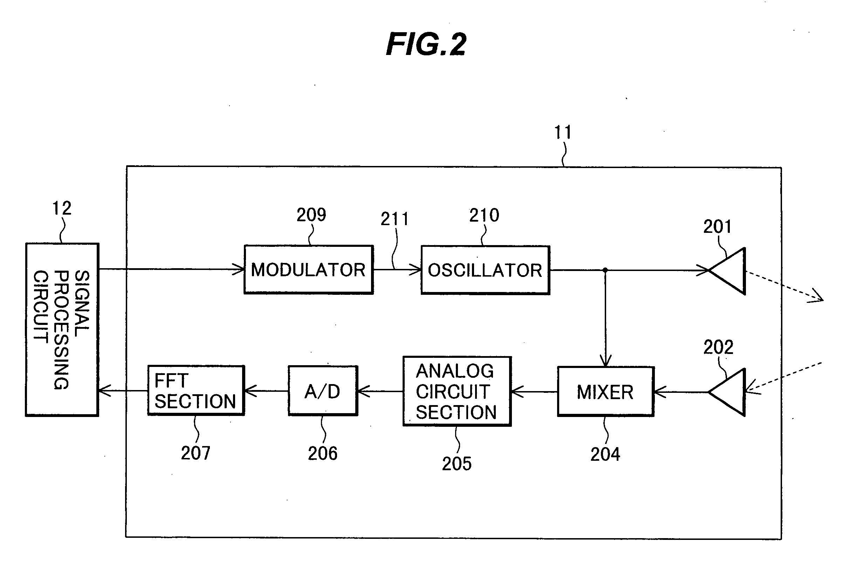

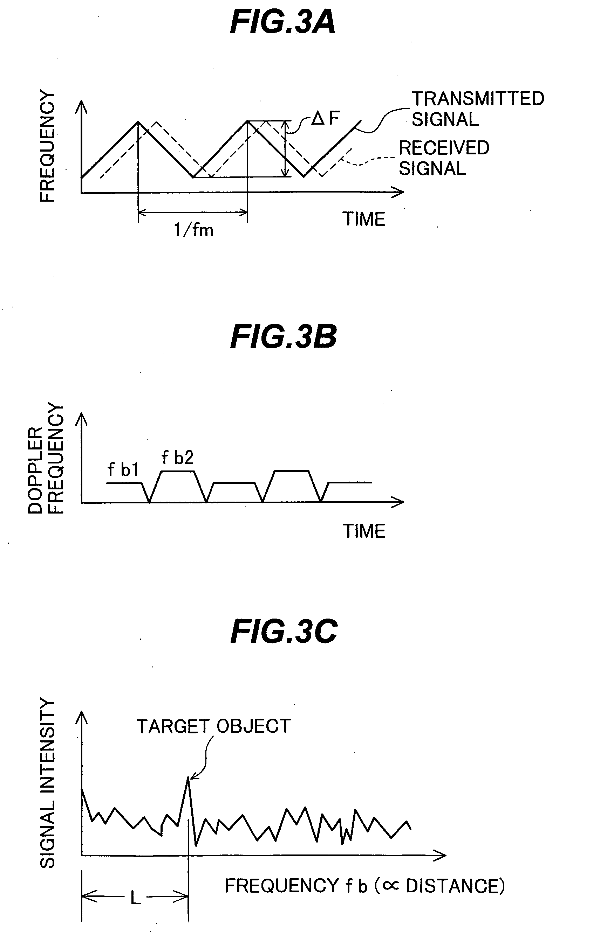

The configuration of the millimeter wave radar used in the millimeter wave radar monitoring system according to the first embodiment of the present invention will be described below with reference to Figs. 2 and 3A to 3C.

Fig. 2 is a block diagram showing the configuration of the millimeter wave radar used in the millimeter wave radar monitoring system according to the first embodiment of the present invention, and Figs. 3A to 3C are charts for explaining the operation of the millimeter wave radar used in the millimeter wave radar monitoring system according to the first embodiment of the present invention.

As shown in Fig. 2, the millimeter wave radar 11 of the millimeter wave radar unit 10 according to this embodiment comprises a modulator 209, an oscillator 210 and a transmitting antenna 201, which cooperatively constitute a transmitting system, and also comprises a receiving antenna 202, a mixer 204, an analog circuit section 205, an A/D converter 206, and an FFT (Fast Fourier Transform) section 207, which cooperatively constitute a receiving system.

The oscillator 210 oscillates at oscillation frequency in accordance with a modulated signal 211 from the modulator 209, and an oscillated high-frequency signal is radiated from the transmitting antenna 201. In the millimeter wave radar of this embodiment, a radio signal in the millimeter wave band is employed as the high-frequency signal.

A millimeter wave signal reflected by and returned from the moving target, such as a suspicious invader, is received by the receiving antenna 202 and sent to the mixer 204. On the other hand, a part of an output signal from the oscillator 210 is also supplied to the mixer 204 through a directional coupler. A beat signal generated upon mixing of the signal from the oscillator 210 and the received signal is sent to the analog circuit section 205. In the case of the receiving system being of homodyne type that conversion into the base band is directly performed, the beat signal as an output from the mixer 204 provides the Doppler frequency. The beat signal is converted into a digital signal by the A/D converter 206 and supplied to the FFT section 207. A frequency spectrum of the beat signal is obtained in the FFT section 207 through Fast Fourier Transform and sent to the signal processing circuit 12.

A description is now made of the radar detection principle of the millimeter wave radar of this embodiment, the target position, the principle in detection of moving speed information, and output information with reference to Figs. 3A to 3C. Note that Figs. 3A to 3C show the detection principle of a radar of FMCW (Frequency Modulated Continuous Wave) type.

In the FMCW radar, as shown in Fig. 3A, a transmitted wave (transmitted signal) having been subjected to triangular modulation in time region is transmitted from the transmitting antenna 201 to the monitoring area to impinge upon the target, and a received wave (received signal) reflected by the target is received by the receiving antenna 202. On that occasion, when the target is moving, there occurs a Doppler shift between the transmitted signal and the received signal due to both a time delay corresponding to the distance over which the millimeter wave goes to and returns from the target, and a relative speed therebetween. As shown in Fig. 3B, the frequency difference (Doppler frequency) between the transmitted signal and the received signal is fb1 in a rising zone of a triangular wave and fb2 in a falling zone thereof.

By performing the FFT (Fast Fourier Transform) process on the Doppler signal, as shown in Fig. 3(C), the moving target can be extracted as a signal peak in frequency region. In this connection, the frequency at which the peak representing the target appears is proportional to the distance up to the target. Specifically, frequency = 0 means that the distance up to the target is 0. Fig. 3C shows the case in which the target is at the distance L. Also, the moving speed V_{F} of the target can be detected from the frequency difference.

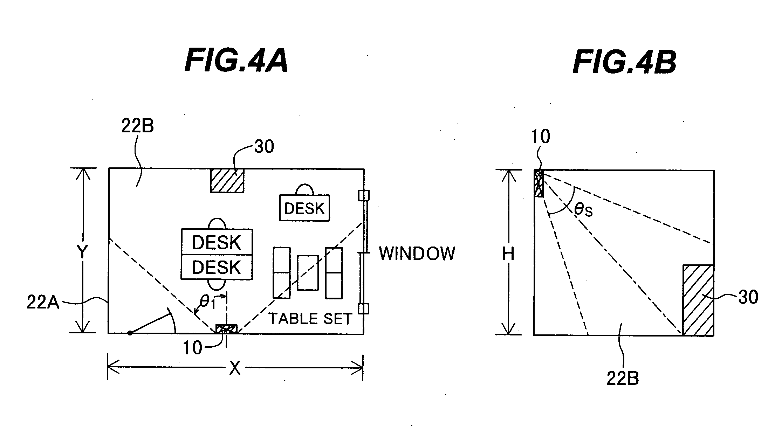

A manner of watching and determining a suspicious invader with the millimeter wave radar monitoring system according to the first embodiment of the present invention will be described below with reference to Figs. 4 to 6.

First, a description is made of a monitoring area layout held in the monitoring-area layout signal section 22 in the millimeter wave radar monitoring system of this embodiment with reference to Figs. 4A and 4B.

Figs. 4A and 4B are explanatory views of the monitoring area layout held in the monitoring-area layout signal section 22 in the millimeter wave radar monitoring system according to the first embodiment of the present invention. Fig. 4A shows the monitoring area layout, and Fig. 4B shows the monitoring area as viewed from a side.

As shown in Fig. 4A, a monitoring area layout 22A illustrates not only the position of the millimeter wave radar unit 10 and the position of an object to be monitored (e.g., a safe) 30, but also desks, a table set, etc., which are arranged in the monitoring area. Fig. 4A shows, by way of example, the case in which the monitoring area is located indoor. When the monitoring area is located outdoor, the monitoring area layout illustrates not only the position of the millimeter wave radar unit and the position of an object 30 to be monitored (e.g., an entrance or a window of a housing), but also the housing itself and a gate. With respect to dimensions X, Y and H of a monitoring area 22B in the monitoring area layout 22A, the position of the millimeter wave radar unit 10, the position of the object to be monitored (e.g., the safe) 30, and the positions of the desks, the table set, etc. are arranged based on the xy-coordinate system. The millimeter wave radar unit 10 is installed in the position at which it is able to watch the object to be monitored (safe) 30, and covers the monitoring area 22B at a monitoring angle θ1 in the horizontal direction. Also, a shown in Fig. 4B, the millimeter wave radar 10 covers the monitoring area 22B at a monitoring angle θs in the vertical direction.

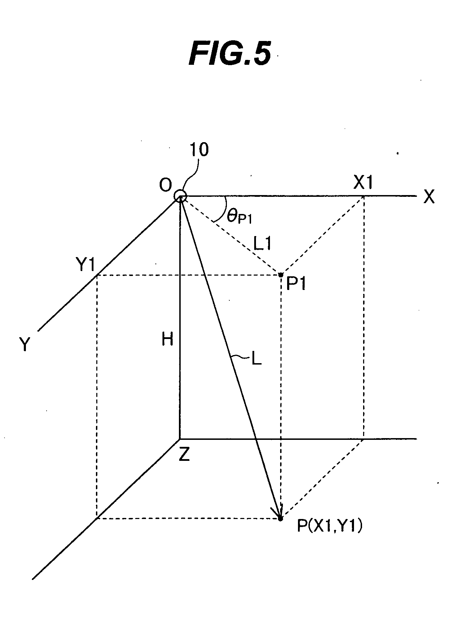

A manner of detecting the position of a target P(X1, Y1) within the monitoring area layout by the millimeter wave radar monitoring system according to the first embodiment of the present invention will be described below with reference to Figs. 5 to 7.

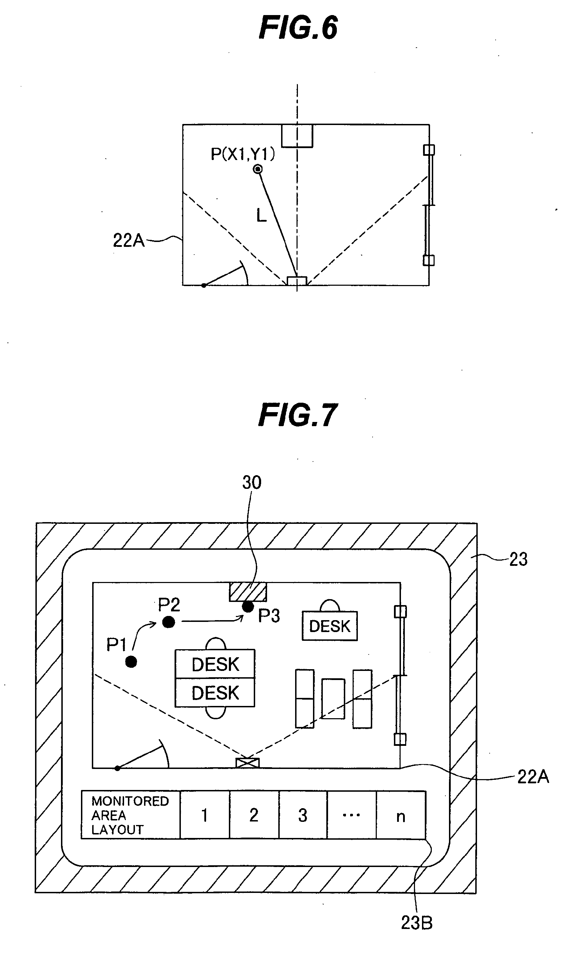

Figs. 5 and 6 are each an explanatory view for explaining the manner of detecting the position of the target P(X1, Y1) within the monitoring area 22B by the millimeter wave radar monitoring system according to the first embodiment of the present invention.

The target tracking circuit section 21 determines a coordinate point P1 of the target (object to be monitored) based on information of an angle θp1 and a distance L1 regarding the moving target, which are inputted from the millimeter wave radar unit 10. In consideration of that the height of the center position of the millimeter wave radar unit 10 is given by P1+H, a coordinate position P(X1, Y1) of the target is detected.

The target tracking circuit section 21 compares the detected coordinate position P(X1, Y1) of the target with the monitoring area layout 22A held in the monitoring-area layout signal section 22 to locate the detected coordinate position P(X1, Y1) of the target in the monitoring area layout 22A as shown in Fig. 6. Then, The target tracking circuit section 21 stores the coordinate position P(X1, Y1) of the target. Further, since the target is moving, successive detected positions P1, P2 and P3 of the target are also stored from one moment to the next.

A display example on the display 23 will be described below with reference to Fig. 7.

Fig. 7 is an explanatory view of a display example on the display obtained by the millimeter wave radar monitoring system according to the first embodiment of the present invention.

The target tracking circuit section 21 tracks and monitors the target of which detected coordinate position is moving in the order of P1, P2 and P3, and simultaneously displays such a movement of the target on the display 23. Here, as one monitoring determination condition, if the target is approaching the monitored object 30, the target tracking circuit section 21 determines that the target is a suspicious invader looking for the monitored object 30 such as the safe. When the target tracking circuit section 21 determines that the target is a suspicious invader, the alarm device 24, shown in Fig. 1, issues an alarm indicating that the suspicious invader is approaching the monitored object 30, and simultaneously the display 23 displays a locus of movement of the target as shown in Fig. 7. Note that the display 23 is not required to always present a display, but it may be controlled so as to present a display only when it is determined that the target is a suspicious invader. In particular, when a plurality of monitoring areas are monitored at the same time using a plurality of millimeter wave radar units, the display 23 displays the states of the plural monitoring areas in a switchable way. Accordingly, when it is determined that the target is a suspicious invader, the display 23 is forcibly switched over to display both the layout of the monitoring area, for which the target has been determined as being a suspicious invader, and the locus of movement of the suspicious invader. A switchover bar 23B shown in Fig. 7 will be described later.

A description is now made of the construction of the millimeter wave radar monitoring system according to another example of the first embodiment of the present invention with reference to Fig. 1.

As shown in Fig. 1, this example further comprises a monitoring camera 40. The display 23 can display not only the layout of the monitoring area and the locus of movement of the suspicious invader, but also an image picked up by the monitoring camera 40 for closer observation of the suspicious invader when the target tracking circuit section 21 detects the presence of the suspicious invader. In this example, the display may be provided as separate units for displaying the layout of the monitoring area and for displaying the image picked up by the monitoring camera 40.

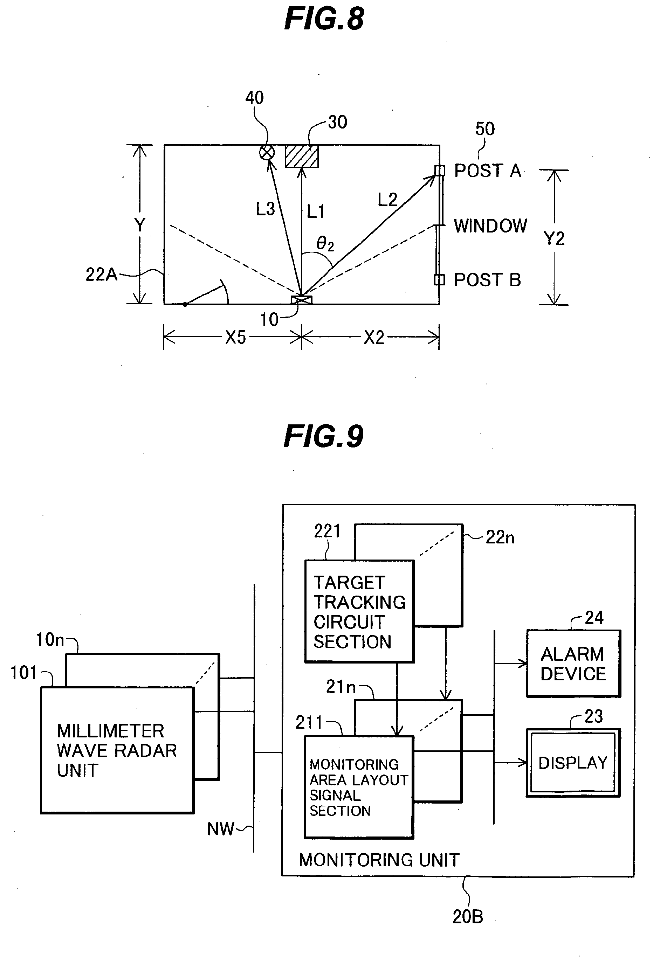

A manner of adjusting the millimeter wave radar when it is installed for use with the millimeter wave radar monitoring system according to the first embodiment of the present invention, and a manner of confirming the installed position, which is carried out sometimes, will be described below with reference to Fig. 8.

Fig. 8 is an explanatory view for explaining the manner of adjusting the millimeter wave radar when it is installed for use with the millimeter wave radar monitoring system according to the first embodiment of the present invention, and the manner of confirming the installed position, which is carried out sometimes.

In the monitoring area layout 22A, based on the position at which the millimeter wave radar unit 10 is installed, a distance L1 up to the monitored object 30 and a distance L2 up to a post A 50 at a side of a window are measured and inputted in the monitoring-area layout signal section 22 beforehand or displayed on the display 23. Also, when the monitoring camera 40 is installed, a distance L3 up to the monitoring camera 40 is likewise measured and inputted in the monitoring-area layout signal section 22 beforehand or displayed on the display 23.

After setting the set of information, if any of the distances L1 to L3 is tampered (i.e., the position of any of the monitored objects is fraudulently moved) by any internal unauthorized person, it is possible to send a detected signal to the monitoring system for transmission as a tamper signal.

Further, the millimeter wave radar unit 10 may be operated one of in a short-range detection mode and a far-range detection mode so as to switch over the detected zone. When the millimeter wave radar 11 of the millimeter wave radar unit 10 has a plurality of transmitting antennas, the far-range detection can be realized by transmitting millimeter waves from the plurality of transmitting antennas at the same time and narrowing the radiation angle. Also, the short-range detection can be realized by reducing the number of ones of the plural transmitting antennas, which transmit millimeter waves at the same time, and widening the radiation angle.

As described above, the target tracking circuit section 21 tracks the target in accordance with the information of the moving target detected by the millimeter wave radar unit 10 and the monitoring area layout information, and then determines the presence of a suspicious invader when the target is approaching the monitored object. For example, when a target such as a bird, e.g., a crow, accidentally enters the monitoring area in the outdoor, whether the target is a suspicious invader can be surely determined and a false alarm, etc. can be avoided by tracking the movement of the detected target. Likewise, in the indoor, small animals, e.g., a mouse, can be avoided from being falsely determined as a suspicious invader. Further, it is possible to prevent a malfunction that has been caused in a conventional infrared sensor upon impingement of sunlight, etc. In addition, since the millimeter wave radar unit includes the transmitting system and the receiving system both incorporated in one unit, a relatively long time taken for alignment of two optical axes of a transmitting unit and a receiving unit in the conventional infrared sensor is no longer required and the installation cost can be reduced.

With the first embodiment, as described above, it is possible to reduce the installation cost and to improve reliability with less probability of false alarms.

Next, the overall configuration of a millimeter wave radar monitoring system according to a second embodiment of the present invention will be described below with reference to Fig. 9.

Fig. 9 is a block diagram showing the overall configuration of the millimeter wave radar monitoring system according to the second embodiment of the present invention. Note that the same reference characters as those in Fig. 1 denote the same components.

This second embodiment represents the configuration of the monitoring system in which the millimeter wave radar unit 10 is installed in many places within a building or the like. A plurality of millimeter wave radar units 101, ..., 10n are connected to a monitoring unit 20B via a network NW. The configuration of each of the millimeter wave radar units 101, ..., 10n is the same as that of the millimeter wave radar unit 10 shown in Fig. 1. The monitoring unit 20B comprises a plurality of target tracking circuit sections 211, ..., 21n, a plurality of monitoring-area layout signal sections 221, ..., 22n, a display 23, and an alarm device 24. The display 23 and the alarm device 24 are employed in common to the plurality of millimeter wave radar units. The target tracking circuit section 211 tracks a target by employing information from the millimeter wave radar unit 101 and information stored in the monitoring-area layout signal section 221. When the target tracking circuit section 211 determines that the target is a suspicious invader, the alarm device 24 issues an alarm and simultaneously the display 23 displays a locus of movement of the suspicious invader. Likewise, the target tracking circuit section 21n tracks a target by employing information from the millimeter wave radar unit 10n and information stored in the monitoring-area layout signal section 22n. When the target tracking circuit section 21n determines that the target is a suspicious invader, the alarm device 24 issues an alarm and simultaneously the display 23 displays a locus of movement of the suspicious invader. The display 23 includes the switchover bar 23B, as shown in Fig. 7, and can display respective conditions of a plurality of monitoring areas in a switchable way. When it is determined that the target is a suspicious invader, the display 23 is forcibly switched over to display both the layout of the monitoring area, for which the target has been determined as being a suspicious invader, and the locus of movement of the suspicious invader.

With this second embodiment, as described above, it is possible to reduce the installation cost and to improve reliability with less probability of false alarms. Further, a plurality of monitoring areas can be easily monitored.

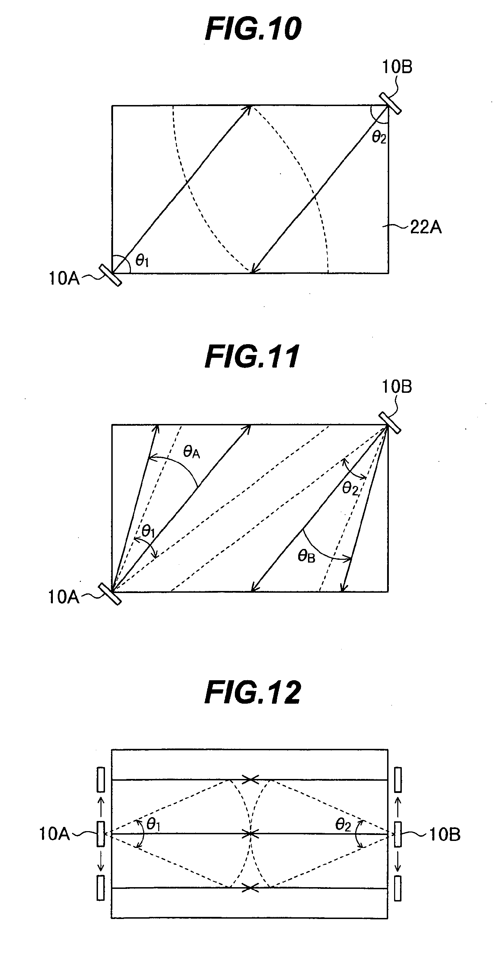

Next, the configurations of millimeter wave radar monitoring systems according to third to sixth embodiments of the present invention will be described below with reference to Figs. 10 to 13.

Figs. 10 to 13 are plan arrangement views showing the configurations of the millimeter wave radar monitoring systems according to the third to sixth embodiments of the present invention.

These embodiments are featured in arrangement of one or more millimeter wave radar units and in a manner of moving them. Each of Figs. 10 to 13 shows the arrangement of the millimeter wave radar unit(s), looking at a floor surface from the ceiling side.

In the third embodiment shown in Fig. 10, millimeter wave radar units 10A, 10B are installed in masking areas near the ceiling within a monitoring area layout 22A. A millimeter wave radiated from each of the millimeter wave radar units is highly permeable through materials having low radio absorptivity, such as plastics, cloths and woods. Accordingly, by embedding the millimeter wave radar unit near the ceiling and arranging a member having a surface pattern, which is analogous to that of wallpaper or wainscot, in front of the transmitting and receiving antennas, the millimeter wave radar unit can be installed in a state that an invader cannot easily recognize the presence of the millimeter wave radar unit upon just looking at the ceiling or thereabout, unlike the monitoring camera, etc.

In the third embodiment shown in Fig. 10, monitoring angles θ1, θ2 of the millimeter wave radar units 10A, 10B are each 90 degrees. Because all of the monitoring area layout 22A cannot be covered by one of the millimeter wave radar units 10A, 10B, the two millimeter wave radar units 10A, 10B are arranged in diagonally opposed positions to cover all of the monitoring area layout 22A.

In the fourth embodiment shown in Fig. 11, millimeter wave radar units 10A, 10B have monitoring angles θ1, θ2 of smaller than 90 degrees. The millimeter wave radar units 10A, 10B are arranged in a diagonally opposed relation and are designed so as to swing center positions of their transmitting and receiving zones to the left and right through angles ± θA, ± θB, respectively, thereby covering all of the monitoring area. The angles θA, θB are set to proper values so that all of the monitoring area layout 22A can be covered.

In the fifth embodiment shown in Fig. 12, two millimeter wave radar units 10A, 10B are disposed in positions on wall surfaces opposed to each other, and the millimeter wave radar units 10A, 10B are reciprocally moved along the wall surfaces at a predetermined period so as to cover all of the monitoring area.

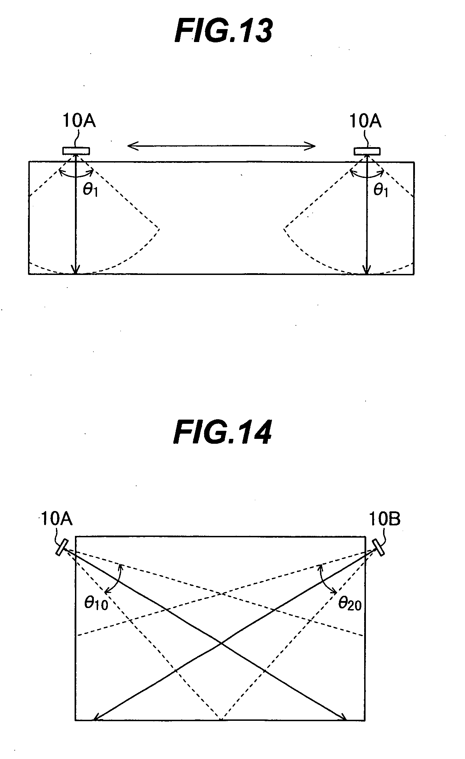

The sixth embodiment shown in Fig. 13 represents the case in which the monitoring area layout 22A is large. One millimeter wave radar unit 10A is reciprocally moved along a long wall surface at a predetermined period so as to cover all of the monitoring area.

With the third to sixth embodiments, as described above, it is possible to reduce the installation cost and to improve reliability with less probability of false alarms. Further, a large monitoring area can be easily monitored.

Next, the configurations of millimeter wave radar monitoring systems according to seventh to ninth embodiments of the present invention will be described below with reference to Figs. 14 to 16.

Figs. 14 to 16 are side arrangement views showing the configurations of the millimeter wave radar monitoring systems according to the seventh to ninth embodiments of the present invention.

These embodiments are featured in arrangement of one or more millimeter wave radar units and in a manner of moving them. Each of Figs. 14 to 16 shows the arrangement of the millimeter wave radar unit(s) as viewed from the sidewall side.

In the seventh embodiment shown in Fig. 14, millimeter wave radar units 10A, 10B are installed in masking areas near walls within a monitoring area layout 22A. The millimeter wave radar units 10A, 10B have monitoring angles θ10, θ20, respectively. By embedding those two millimeter wave radar units 10A, 10B in wall surfaces opposed to each other, most of the monitoring area layout 22A can be covered.

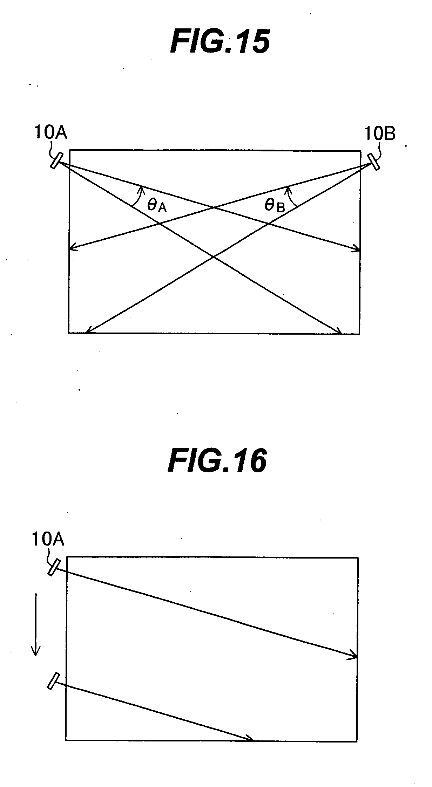

The eighth embodiment shown in Fig. 15 represents the case in which millimeter wave radar units 10A, 10B have small monitoring angles. In this case, a large monitoring area is covered by arranging the millimeter wave radar units 10A, 10B near walls opposed to each other and swinging center positions of their transmitting and receiving zones up and down through angles ± θA, ± θB, respectively.

The ninth embodiment shown in Fig. 16 represents the case in which the monitoring area layout 22A is large. One millimeter wave radar unit 10A is reciprocally moved up and down along a wall surface at a predetermined period so as to cover a large area.

With the seventh to ninth embodiments, as described above, it is possible to reduce the installation cost and to improve reliability with less probability of false alarms. Further, a large monitoring area can be easily monitored.

According to the present invention, it is possible to reduce the installation cost and to improve reliability with less probability of false alarms. Further, a large monitoring area can be easily monitored.

## Claims

1. A millimeter wave radar monitoring system comprising a millimeter wave radar unit (10), which includes a millimeter wave radar (11) having a transmitting antenna (201) for radiating a radio wave and a receiving antenna (202) for receiving a wave reflected by a target having received the radio wave radiated from said transmitting antenna, and which includes signal processing means (12) for the received radio wave, and a monitoring unit (20) for monitoring the target based on information from said millimeter wave radar unit,
wherein said monitoring unit includes target tracking and monitoring means (21) for collating position information of the target detected by said millimeter wave radar unit with monitoring area layout information, thereby tracking a motion of the target,
the target being displayed along with the monitoring area layout information.

2. A millimeter wave radar monitoring system according to Claim 1, wherein said millimeter wave radar unit is embedded in a masking area of a wall or ceiling of a monitoring area.

3. A millimeter wave radar monitoring system according to Claim 2, wherein said millimeter wave radar unit is movable along a wall surface or a ceiling surface.

4. A millimeter wave radar monitoring system according to Claim 2, wherein said millimeter wave radar unit changes a radiation angle of said millimeter wave radar with time.

5. A millimeter wave radar monitoring system comprising a millimeter wave radar unit (10), which includes a millimeter wave radar (11) having a transmitting antenna (201) for radiating a radio wave and a receiving antenna (202) for receiving a wave reflected by a target having received the radio wave radiated from said transmitting antenna, and which includes signal processing means (12) for the received radio wave, and a monitoring unit (20) for monitoring the target based on information from said millimeter wave radar unit,
wherein said monitoring unit includes target tracking and monitoring means (21) for collating position information of the target detected by said millimeter wave radar unit with monitoring area layout information, thereby tracking a motion of the target,
said target tracking and monitoring means determining whether the target is a suspicious invader based on the position information of the target detected by said millimeter wave radar unit and position information of a monitored object contained in the monitoring area layout information, and issuing an alarm when the target is determined as being a suspicious invader.

6. A millimeter wave radar monitoring system according to Claim 5, wherein said millimeter wave radar unit is embedded in a masking area of a wall or ceiling of a monitoring area.

7. A millimeter wave radar monitoring system according to Claim 6, wherein said millimeter wave radar unit is movable along a wall surface or a ceiling surface.

8. A millimeter wave radar monitoring system according to Claim 6, wherein said millimeter wave radar unit changes a radiation angle of said millimeter wave radar with time.
